(19) Europäisches Patentamt / European Patent Office / Office européen des brevets

(11) **EP 4 476 192 B1**

(12) **EUROPEAN PATENT SPECIFICATION**

(45) Date of publication and mention
of the grant of the patent:
**29.07.2026 Bulletin 2026/31**

(21) Application number: **23708891.9**

(22) Date of filing: **07.02.2023**

(51) International Patent Classification (IPC):
*C04B 28/06* (2006.01)     *C04B 28/14* (2006.01)
*C04B 111/00* (2006.01)     *C04B 111/70* (2006.01)

(52) Cooperative Patent Classification (CPC):
(C-Sets available)
**C04B 28/065; C04B 28/148;** C04B 2111/0062;
C04B 2111/70     (Cont.)

(86) International application number:
**PCT/IB2023/051068**

(87) International publication number:
**WO 2023/152629 (17.08.2023 Gazette 2023/33)**

(54) **PROCESS FOR PREPARING BIO-AERATED COMPOSITE MATERIALS**

VERFAHREN ZUR HERSTELLUNG VON BIOBELÜFTETEN VERBUNDWERKSTOFFEN

PROCÉDÉ DE PRÉPARATION DE MATÉRIAUX COMPOSITES BIO-AÉRÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.02.2022 IT 202200002264**

(43) Date of publication of application:
**18.12.2024 Bulletin 2024/51**

(73) Proprietor: **ENEA - Agenzia Nazionale per le
Nuove Tecnologie,
l'Energia e lo Sviluppo Economico Sostenibile
00196 Roma (RM) (IT)**

(72) Inventors:
• **DE FAZIO, Piero
  00196 Roma RM (IT)**
• **SPOSATO, Corradino
  00196 Roma RM (IT)**
• **ALBA, Maria Bruna
  00196 Roma RM (IT)**

• **LETER, Giorgio
  00196 Roma RM (IT)**
• **FEO, Andrea
  00196 Roma RM (IT)**

(74) Representative: **Perani & Partners S.p.A.
Corso Europa, 15
20122 Milano (IT)**

(56) References cited:
**WO-A1-2019/049005     US-A- 1 951 691
US-A- 4 016 240**

• **GALTSEVA NADEZDA ET AL: "Effective binder
based on the artificial anhydrite for
manufacturing of filling mixtures", vol. 193, no.
03048, 30 January 2018 (2018-01-30), pages
03048, XP055964141, Retrieved from the Internet
<URL:https://www.matec-conferences.org/
articles/matecconf/pdf/2018/52/
matecconf_esci2018_03048.pdf> [retrieved on
20220923], DOI: 10.1051/matecconf/
201819303048**

(52) Cooperative Patent Classification (CPC): (Cont.)

C-Sets
**C04B 28/148, C04B 7/323, C04B 22/068,
C04B 22/147, C04B 38/02, C04B 2103/0001,**

**C04B 2103/34;
C04B 28/148, C04B 7/323, C04B 22/068,
C04B 22/147, C04B 2103/34;
C04B 28/148, C04B 7/323, C04B 22/147,
C04B 2103/34, C04B 2103/42**

**EP 4 476 192 B1**

**Description**

FIELD OF THE INVENTION

The present invention relates to an aqueous mixture or grout to be used in the preparation of a particular type of lightened composite material, the respective process of preparation of said particular type of lightened composite material and the said lightened composite material obtained by setting and maturation of said aqueous composition or grout.

STATE OF THE ART

In the context of construction materials, gypsum plays an important role as an aerial binder, whether used as it is (e.g. for panels and stuccoes) or as a component of composite mortars.
In the building construction sector, the interest in the development and use of lightened composite materials for load-bearing structures, partitions and filling applications, which can improve the structural, energy and aesthetic performance of buildings, is increasingly emerging.
The main lightened products used in the construction sector are gypsum-based materials and cellular concrete.
Gypsum, or calcium sulphate dihydrate ($CaSO_4 \cdot 2(H_2O)$), covers a wide range of applications as an airborne binder or as a component of composite mortars.
Calcium sulphate is found in nature with different levels of hydration and crystal habit:

- natural gypsum: mineral extraction product, it is a crystal of calcium sulphate dihydrate which, when subjected to grinding and heat treatment, appears in two forms, a hemihydrate form (at T=128°C) and a soluble anhydrous form (at T=163°C), both usable as aerial binders, once mixed with water. The hydration reaction of gypsum is an exothermic reaction, which leads to the crystallization of gypsum in its final form of dihydrate, during the setting and maturation phases;
- anhydrite is a mineral formed from anhydrous calcium sulphate. Anhydrite occurs in two crystalline forms: $\alpha$, soluble in water; $\beta$, completely insoluble. The anhydrite $\alpha$ crystallizes in a hexagonal system, still preserving a residue of water of crystallization, and has a setting time ranging from 30 minutes to 2 hours. The $\beta$ anhydrite crystallizes in the orthorhombic system and has a very compact ion arrangement, such that it is difficult to access the water of hydration molecules to activate its setting.

Unlike hemihydrate gypsum, once mixed with water, anhydrite does not hydrate completely with dihydrate gypsum; hence it results in a slower setting and much lower mechanical characteristics compared to those of hemihydrate gypsum.
The gypsum-based materials that are most used in the construction sector are plasterboard and perforated blocks.
Plasterboard is composed of a slab of gypsum coated with a special cardboard, usually laid on a load-bearing structure composed of galvanized sheet metal profiles. The slabs on the market have different sizes, thicknesses and colours; generally, the thickness is between 10 and 20 mm. Applications for plasterboard are mainly internal partitions and the construction of false ceilings. The specific densities of the product range from 900 to 1100 kg/m³ with thermal conductivity ranging from 0.2 to 0.32 W/mK.
Blocks of gypsum are a construction system used for the construction of internal walls. These are products with thicknesses of 6-10 cm, which have lightening holes inside the product, and are both thermally and acoustically insulating and due to their chemical nature, guarantee a high fire resistance (fire classification: A1).
The term cellular concrete refers to those concretes that have a porous structure. Autoclaved aerated concrete (AAC) is without doubt the most common product. AAC blocks are made in various sizes and have among their characteristics a density that varies, depending on use, between 300 and 800 kg/m³, with mechanical compressive strengths varying between 2 and 8 MPa and, in addition, are characterized by high thermal insulation, generally between 0.09 and 0.3 W/m K, acoustic and fire resistance (fire rating: A1).
The approaches for lightening composite building materials include primarily two methods:

- Indirect lightening method: involves the incorporation of low-density inorganic or organic solid materials into the liquid mixture;
- Direct lightening method: the reduction of the density of the product is obtained by the formation of gaseous pores formed by gases produced by chemical reactions or by added foams.

The indirect lightening method is certainly the simplest. Organic and inorganic solid materials, at low density, are added to the liquid mixture as inert filler material, generally in amounts ranging from 2 to 10% by weight. Among the inorganic materials, perlite, vermiculite and expanded clay are mainly used. With this lightening process, density between 500 and 1100 kg/m$^3$ is generally obtained, with average compressive strength values exceeding 2 MPa.

Among the organic fillers, the most commonly used polymer is expanded polystyrene, which, if added to the mixture in an amount of 2% by weight, is able to reduce the final density by 50% with respect to the nominal density.

Direct lightening methods include those that generate porosities from the inside, by means of the formation of gas produced by chemical reactions inside the liquid mixture, and those for which the porosity is mechanically transferred by means of foaming agents. The former must take into consideration the chemical characteristics of the materials present in the mixture and the pH of the medium. The types of gas primarily used for the formation of pores are $CO_2$, produced by carbonated salts in contact with an organic or inorganic acid, oxygen, by reaction of dismutation of hydrogen peroxide with cobalt salt, or hydrogen, by reaction between metallic aluminium and calcium hydroxide (e.g. autoclaved aerated concretes).

The use of surfactant-based foaming agents, generated within the mixture or introduced separately, results in the reduction of the contact surface tension with the products of the mixture, resulting in the formation of pores. In general, all types of surfactant can be used, but generally sodium lauryl sulphate is the most common. AU2016202650 A1 discloses gypsum-containing suspensions comprising stucco, trimetaphosphate salt and naphthalene sulfonate dispersant. Additional liquid mixture additives may include accelerators, binders, starch and paper fibre, fiberglass, and other known ingredients.

CN112876112 A concerns the technical field of environmentally friendly concrete, in particular concerns a cement material for environmentally friendly concrete and neutral concrete.

CN112876122 A discloses a high stability concrete expanding agent and a preparation method thereof. The invention aims to provide the high-stability concrete expanding agent which is as efficient as possible in its expansion effect and which is stable for a long time, and the method for preparing this high-stability concrete expanding agent. The high stability concrete expanding agent comprises: 18-22% by weight special clinker for the expanding agent, 18-22% by weight lime, 28-42% by weight anhydrite, 5-8% by weight mineral, 5-8% by weight carbonaceous residues, 4-6% by weight light calcined magnesia, 14-16% by weight coal slag, 0.2-0.3% by weight plastic expanding agent, and 0.2-0.3% by weight citric acid.

CN103771896 A discloses a construction material for thermal insulation, gypsum foam and a preparation method thereof.

GB2395731 A discloses a wall panel comprising a frame of cold-formed interconnected metal elements, a net fixed to one face of the frame, on top of which there is a surface layer of fixed self-levelled hydraulic material, at least part of which is formed in situ. The frame may be steel, and the fixable composition may be an anhydrite, gypsum or cement-based composition, and have a preformed portion embedded therein. Methods for forming the described panel are described.

US6774146 B2 discloses a combination of dispersing agent and foaming agent, believed to be useful in the manufacture of plasterboard and other aqueous cementitious products.

WO2019049005 A1 discloses an aqueous mixture or grout comprising: a) cementitious material; b) silica sand; c) an aerating agent, wherein said aerating medium c) is constituted by hydrogen peroxide and by a bio-organism containing the catalase enzyme; said aqueous mixture is obtained without the addition of lime, alkaline hydroxides and alkaline earth hydroxides, and calcium sulphate in hydrated or non-hydrated form. The aqueous mixture described is used as a starting material in the process of preparing a particular type of aerated autoclaved cement or bio-aerated autoclaved cement, referred to as BAAC.

## SUMMARY OF THE INVENTION

The Applicant has found that, by using synthetic anhydrous calcium sulphate in combination with an aerating agent consisting of hydrogen peroxide and a bio-organism containing the enzyme catalase, in particular *Saccharomyces cerevisiae,* in an aqueous cement mixture, it is possible to obtain a lightened composite material usable for the preparation of calcium sulphate-based products, including plasterboard and gypsum blocks.

The object of the present invention is, therefore, an aqueous mixture or grout comprising:

A) a solid material, itself containing:

- calcium sulphate dihydrate in a concentration between 60 and 90% by weight on the total weight of said solid material A) contained in said aqueous mixture or grout;
- cement material in a concentration between 5 and 30% by weight on the total weight of the solid material A) contained in said aqueous mixture or grout,

B) an aerating agent;

C) a fluidizing agent, and
D) water, in a water / solid weight ratio between 0.2 and 0.6,
E) potassium sulphate,

**wherein**

i) the calcium sulphate dihydrate contained in the solid material A) is obtained in situ by treatment of synthetic anhydrous calcium sulphate, preferably synthetic anhydrite, with the water D) in which the potassium sulphate E) is dissolved in a concentration between 0.9 and 1.7%, preferably 1.3% by weight with respect to the weight of the anhydrous calcium sulphate (w/w),
ii) the cement material comprises cement and sulfoaluminate clinker,
iii) the aerating agent B) comprises or consists of hydrogen peroxide ($H_2O_2$) in liquid form or solid complexed peroxide, capable of decomposing by releasing hydrogen peroxide, and of a bio-organism containing the catalase enzyme.

A further object of the present invention is a lightened calcium sulphate based composite cementitious material obtained by maturation of said aqueous mixture or grout, at room temperature and for a time between 25 and 30 days.
Finally, a further object of the present invention is a product based on the aforesaid lightened calcium sulphate composite cement material.

*Advantages of the invention*

The aqueous mixture or grout described allows the realization of a lightened composite material, based on calcium sulphate, through a process comprising a step of maturation of the mixture, consisting of a bio-aeration that allows the reduction of the density of the final product.
Advantageously, the aqueous mixture or grout is ecologically sustainable, comprising synthetic anhydrous calcium sulphate, in particular synthetic anhydrite, obtained as a by-product or second raw material from the production of gaseous hydrofluoric acid, this allows a reduction in the $CO_2$ produced by the extraction activity of natural gypsum and a lower industrial impact on the land.
Still advantageously, the use of synthetic anhydrite in the aqueous mixture or grout allows significant energy savings, allowing avoidance of mechanical (extraction and grinding) and thermal (calcination) processes required in conventional industrial practice for the production of gypsum.
Advantageously, the lightened composite cement material, based on synthetic anhydrous calcium sulphate, with the same density, has completely comparable physical (thermal insulation) and mechanical (compressive strength) characteristics and, in some cases, better than those of similar commercially available gypsum-based and/or lightened products.
Further advantageously, the lightened composite cement material, based on calcium sulphate, is a valid technical and economic alternative to other lightened composite materials, such as autoclaved aerated concrete, requiring a more favourable energy production process and with less ecological impact, due to the lower $CO_2$ emissions resulting from the replacement of the Portland clinker with a cement material comprising cement and sulfoaluminate clinker and above all from the elimination of autoclaves from the production process.
Further advantageously, the lightened composite cement material finds potential use in the construction sector and, more generally, in the construction, in particular in the production, of products for applications alternative to those of plasterboard and perforated gypsum blocks.
Still advantageously, the lightened composite cementitious material and, consequently, the products based on said lightened composite cementitious material are completely recyclable at the end of their life.

DESCRIPTION OF THE FIGURES

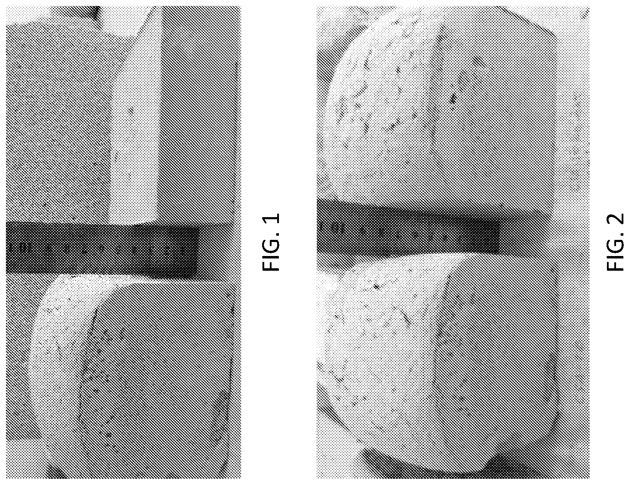

Figure 1 is a comparison image between a sample (shown to the left of the figure), obtained by bio-aeration of the aqueous mixture of the invention, and a sample (shown to the right of the figure), obtained from the similar aqueous mixture, but not subjected to bio-aeration.

Figure 2 is a comparison image between a sample (shown to the left of the image) obtained from the aqueous mixture of the invention, containing CSA clinker in concentration equal to 20% and potassium sulphate, and a sample (shown to the right of the figure) obtained from the similar aqueous mixture, but including CSA clinker in the same concentration, but in the absence of potassium sulphate.

Figure 3 is an example of a strength test according to a stress-strain type diagram of a sample obtained from the aqueous mixture or grout described in EXAMPLE 1.

Figure 4 shows a 10x magnification of a section of a sample obtained from the aqueous mixture or grout described in EXAMPLE 1, in which the pore dimensions are highlighted by comparison with a 3 mm sized bar.

Figure 5 shows an example of a strength test according to a stress-strain type diagram of a sample obtained from the aqueous mixture or grout described in EXAMPLE 2.

Figure 6 shows a 10x magnification of a section of a sample obtained from the aqueous mixture or grout described in EXAMPLE 2.

Figure 7 is a series of samples obtained from the aqueous mixture or grout described in EXAMPLE 3.

DETAILED DESCRIPTION OF THE INVENTION

For the purposes of the present invention, *"comprising / containing"* one or more components does not exclude the presence of further components in addition to the one or more explicitly listed. For the purposes of the present invention, the expression according to which an object *"consists or is formed or is composed of"* one or more components, means that the presence of additional components in addition to the one or more explicitly listed is excluded in the object.

The object of the present invention is an aqueous mixture or grout, comprising: A) a solid material, in turn comprising calcium sulphate dihydrate and cementitious material; B) an aerating agent; C) a fluidizing agent; D) water; E) potassium sulphate.

For the purposes of the present invention, the calcium sulphate is contained in the aqueous mixture or grout in a concentration of between 60 and 90%, preferably between 66 and 84%, more preferably equal to 75% by weight on the total weight of the solid material A) (w/w).

For the purposes of the present invention, the cementitious material is contained in the aqueous mixture or grout in a concentration of between 5 and 30%, preferably between 22 and 28%, more preferably equal to 25% by weight on the total weight of the solid material A) (w/w).

For the purposes of the present invention, the aqueous mixture or grout is characterized by the fact that the calcium sulphate dihydrate contained in the solid material A) is obtained *in situ* by treatment of synthetic anhydrous calcium sulphate, preferably synthetic anhydrite, with the water D) in which the potassium sulphate E) is contained in a concentration between 0.9 and 1.7 %, preferably between 1.1 and 1.5%, more preferably equal to 1.3% by weight with respect to the weight of the anhydrous calcium sulphate (w/w).

Preferably, the synthetic anhydrous calcium sulphate is synthetic anhydrite obtained as a by-product, in powdery solid form, of the gaseous hydrofluoric acid (HF) synthesis process, in accordance with the following reaction:

$$CaF_2 + H_2SO_4 \rightarrow 2HF + CaSO_4$$

This reaction involves reacting the fluorite mineral with sulphuric acid. The synthetic anhydrite thus obtained is a material having a pH of about 11 and a calcium sulphate titre of more than 95%.

For the purposes of the present invention, the aqueous mixture or grout is characterized in that the cementitious material comprises cement and sulfoaluminate clinker.

For the purposes of the present invention, the aqueous mixture or grout is further characterized in that the aerating agent B) consists of hydrogen peroxide ($H_2O_2$) dissolved in aqueous solution or in solid complexed form and of a bio-organism containing the catalase enzyme.

Preferably the complexed peroxide in solid form and a complex of hydrogen peroxide and sodium carbonate in 1.5:1 molar ratio.

For the purposes of the present invention, bio-organism containing the enzyme catalase means a single-celled living organism, such as, for example, yeast, preferably an Ascomycete fungus of the genus *Saccharomyces,* more preferably it is *Saccharomyces cerevisiae*.

For the purposes of the present invention, lightened composite cementitious material means a lightened calcium sulphate-based composite material, obtained by aeration of an aqueous mixture or grout, by the production of gaseous oxygen, obtained as a product of hydrogen peroxide dismutation reaction, the overall reaction of which is described below:

$$2H_2O_2 \rightarrow O_2 + 2H_2O$$

This reaction results from the following intermediate oxidation-reduction reactions.

*riduzione: $H_2O_2 \rightarrow [O] + H_2O$*

*ossidazione: $H_2O_2 + [O] \rightarrow O_2 + H_2O$*

In the case described in the present invention, the hydrogen peroxide dismutation reaction is catalysed by enzymes, present in the yeast *Saccharomyces cerevisiae,* of the catalase type.

Catalase is an enzyme synthesized in all cells of eukaryotic organisms to control the harmful effects of the oxidation of biomolecules, due to the endogenous aerobic metabolism of the cells or exposure to exogenous oxidizing species.

In nature there are several forms of catalase, which differ in structure, sequence, composition of the catalytic centre; however, all catalases have in common the fact that they exploit the aforementioned oxido-reductive dismutation reaction of hydrogen peroxide.

Generally, catalase is a tetramer consisting of 4 polypeptide chains of at least 500 amino acids in length. The tetramer is coordinated by 4 iron-containing porphyrin *heme* groups, which allow the enzyme to react with hydrogen peroxide. Having to work with particularly reactive molecules, catalase is an unusually stable enzyme, and such stability is necessary for the enzyme to work particularly quickly and efficiently inside the cell.

The complete molecular mechanism of catalase has not yet been fully established. What is known from the state of the art is that the reaction catalysed by the iron centre takes place in the following two stages:

(1)

$$H_2O_2 + Fe(II)\text{-}E \rightarrow H_2O + O=Fe(III)\text{-}E$$

(2)

$$H_2O_2 + Fe(III)\text{-}E \rightarrow H_2O + O=Fe(III)\text{-}E + O_2$$

Where Fe-E represents the ferrous centre of the *heme* group of the enzyme. An oxygen atom binds an iron atom of the ferric centre of the *heme* group and releases a water molecule (stage (1)). In the next stage (stage (2)) of the reaction, the ferric iron binds an additional molecule of hydrogen peroxide, releasing one molecule of water and one of molecular oxygen.

The overall reaction is strongly exergonic, measuring the following thermodynamic parameters for hydrogen peroxide decomposition, at "standard" temperature (25°C):

$$(\Delta H° = -47 \text{ kcal/mol}; \Delta S° = +34 \text{ kcal/mol·K}; \Delta G° = -57 \text{ kcal/mol})$$

The enzymatic activity of catalases allows decomposition of millions of hydrogen peroxide molecules per second, in an optimal pH range ranging from 4 to 11 depending on the species (Switala J, Loewen PC. Diversity of properties among catalases. Arch Biochem Biophys. 2002 May 15; 401(2):145-54).

For the purposes of the present invention, the preparation of the lightened composite cementitious material comprises a leavening step, in which the reaction of dismutation of hydrogen peroxide in water and oxygen, promoted by the catalase enzyme contained in the microorganism *Saccharomyces cerevisiae,* is exploited to obtain a lightened composite cementitious material.

Among the various existing catalases, those present in yeast cells and, in particular, in the species *Saccharomyces cerevisiae,* are abundant and enzymatically very active.

The genus *Saccharomyces* is a monocellular organism belonging to the kingdom of fungi of the family *Saccharomycetacea,* it is a ubiquitous genus that includes many species of yeasts, including the species *Saccharomyces cerevisiae,* which reproduces by budding and is used in most industrial fermentations for the production of wine, bread, and beer.

In yeast cells there are two forms of the enzyme catalase (Traczyk Aleksandra, Bilinski Tomasz, Litwinska Jadwiga, Skoneczny Marek and Rytka, Joanna. Catalase T deficient mutants of Saccharomyces cerevisiae. Acta Microbiologica Polonica, February 1985, vol. 34, no. 3-4, p. 231-241.), designated as catalase A, confined within peroxisomes, and catalase T, cytoplasmic (Seah Tony C.M., Bhatti A and Kaplan Gordin J. Novel catalytic proteins of baker's yeast. An atypical catalase. Canadian Journal of Biochemistry, November 1973, vol. 51, no. 11, p. 1551-1555.), encoded by two different genes, CTA1 and CTT1, respectively. These two catalases have a different molecular weight of 170-190 kD and 225-250 kD respectively.

In the case of the catalases of *Saccharomyces cerevisiae,* the optimum pH at which the highest activity is obtained ranges from about 6.0 to 8.0. The catalases of *Saccharomyces cerevisiae* have a specific activity among the highest of all catalase species: 116100 $\mu$mol/min/mg (Switala J, Loewen PC. Diversity of properties among catalases. Arch Biochem Biophys. 2002 May 15; 401(2):145-54).

The yeast *Saccharomyces cerevisiae* (brewer's yeast) is an industrially produced ubiquitous species, readily available on the market at a low cost. For the purposes of the present invention, cells of *Saccharomyces cerevisiae* produced industrially in Italy have been used.

Preferably, the fluidizing agent C) is a powdered superplasticizing fluidifying additive for cement grouts.

Still preferably, the fluidizing agent C) is contained in the aqueous mixture or grout in a concentration comprised between 0.9 and 1.1%, preferably equal to 1.0% by weight on the total weight of the solid material A).

Preferably, the bio-organism contained in the aerating agent B) is contained in the aqueous mixture or grout in a concentration comprised between 0.4 and 0.6%, preferably equal to 0.5% by weight on total weight of the solid material A) (w/w).

Further preferably, the weight ratio $H_2O_2$/bio-organism is comprised between 1 and 5, preferably equal to 2 (w/w).

According to a preferred embodiment of the invention, the aqueous mixture or grout comprises F) an organic or inorganic filler.

Preferably, the organic filler F)) is contained in the aqueous mixture or grout in a concentration between 5 and 10%, preferably about 9.9% by weight on the total weight of the solid material A) (w/w).

Still preferably, the inorganic filler F) is contained in the aqueous mixture or grout in a concentration of between 1.0 and 2.0%, preferably 1.5% by weight on the total weight of the solid material A) (w/w).

Preferably, the organic filler F) consists of a diene polymer and/or copolymer, more preferably is rubber granulate from end-of-life tires (ELTs), having a granulometry of between 0.5 and 2.5 mm, or from polyolefin fibres including polypropylene.

Even more preferably, the inorganic filler F) is chosen from: basalt fibre, and oxides in nanometric form.

A further object of the present invention is a lightened composite cementitious material based on calcium sulphate, obtained by maturation of the aqueous mixture or grout, wherein the maturation phase of the aqueous mixture or grout takes place at room temperature, for a time of between 25 and 30 days, preferably equal to 28 days.

A further object of the present invention is a product comprising the lightened calcium sulphate-based composite cement material. Preferably, the product is chosen between plasterboard and gypsum block.

A further object of the present invention is a process for preparing the lightened composite cement material, comprising the following steps: a) preparing the aqueous mixture or grout; b) depositing the aqueous mixture or grout inside a formwork; c) removing, after solidification of the aqueous mixture or grout, the contents of the formwork, after a time comprised between 2 and 3 hours from the casting; d) exposing the solidified grout to the air at room temperature, until complete maturation, for a time comprised between 25 and 30 days, preferably 28 days.

Preferably, step a) of preparing the lightened composite cementitious material comprises the following steps: a.1) dry mixing the solid material A) comprising the anhydrous calcium sulphate, the cementitious material, the hydrogen peroxide, when the latter added is complexed and in solid form, and the fluidizing agent C), forming a mixture of powders; a.2) adding the water D) to the mixture of powders, in which the catalase-containing bio-organism and the potassium sulphate E) are previously dissolved, forming a liquid mixture; a.3) mixing and mechanically homogenizing the liquid mixture, for a time of at least approximately 3 minutes; a.4) adding hydrogen peroxide to the homogenized mixed liquid mixture, if it is dissolved in an aqueous solution of hydrogen peroxide, with a titre between 20 and 35%.

Further preferably, the addition of water in step a.2) is carried out in such a quantity that it is in a water/solids weight ratio of between 0.2 and 0.6, preferably between 0.31 and 0.35, more preferably equal to 0.33 (w/w).

According to a preferred embodiment, the water temperature in step a.2) is comprised between 18°C and 45°C, preferably equal to 25°C.

EXAMPLE 1: Composition and characterization of aqueous mixture or grout

The following table (Table 1) shows the composition, expressed in percentage quantities for each ingredient, of the aqueous mixture or grout of the invention:

Table 1: *percentage quantities used in the aqueous mixture or grout.*

| AQUEOUS MIXTURE OR GROUT COMPOSITION | |
|---|---|
| CaSO$_4$ | 73.9% |
| CSA Clinker | 24.6% |

(continued)

| AQUEOUS MIXTURE OR GROUT COMPOSITION | |
|---|---|
| Fluidifier | 1.0% |
| Yeast | 0.5% |
| Water / solids ratio | 0.31 |
| $H_2O_2$ / yeast ratio | 1.3 - 2.6 (as a function of density) |

The aqueous mixture shown in Table 1 was prepared by the following process:

- Dry-mixing the anhydrite ($CaSO_4$), CSA clinker, the fluidizing agent and yeast, in an appropriate container, forming a mixture of powders;
- Adding to the mixture of powders the mixture water, forming a liquid mixture;
- Mechanically mixing and homogenizing the liquid mixture for 3 minutes;
- Adding the aqueous solution of hydrogen peroxide ($H_2O_2$);
- Mechanically mixing and homogenizing the liquid mixture for a time of between 20 and 30 seconds;
- Pouring the mixed and homogenized mixture into a formwork;
- Removing the product, after solidification, from the formwork, after 2-3 hours;
- Leaving the product to mature in air, at room temperature for 28 days.

For the preparation of the samples, cubic-shaped formworks of dimensions equal to 100x100x100 mm and 150x150x150 mm were used.

The results of the physical and mechanical characterization tests of the samples, after maturation of 28 days, are shown in the following table (Table 2), in terms of density values ($kg/m^3$), mechanical strength (MPa), and thermal conductivity (W/m·K) of the final product. For each size, the results are expressed as an average of 5 repeated and independent tests:

Table 2: *Physical and mechanical characterization of the samples of the lightened composite material of the invention, after the maturation time of 28 days.*

| Density ($kg/m^3$) | Mechanical resistance (MPa) | Thermal conductivity (W/m·K) |
|---|---|---|
| 950 | 6 | 0.305 |
| 800 | 3.1 | 0.258 |
| 750 | 2.3 | 0.213 |
| 650 | 1.7 | 0.172 |
| 600 | / | 0.159 |

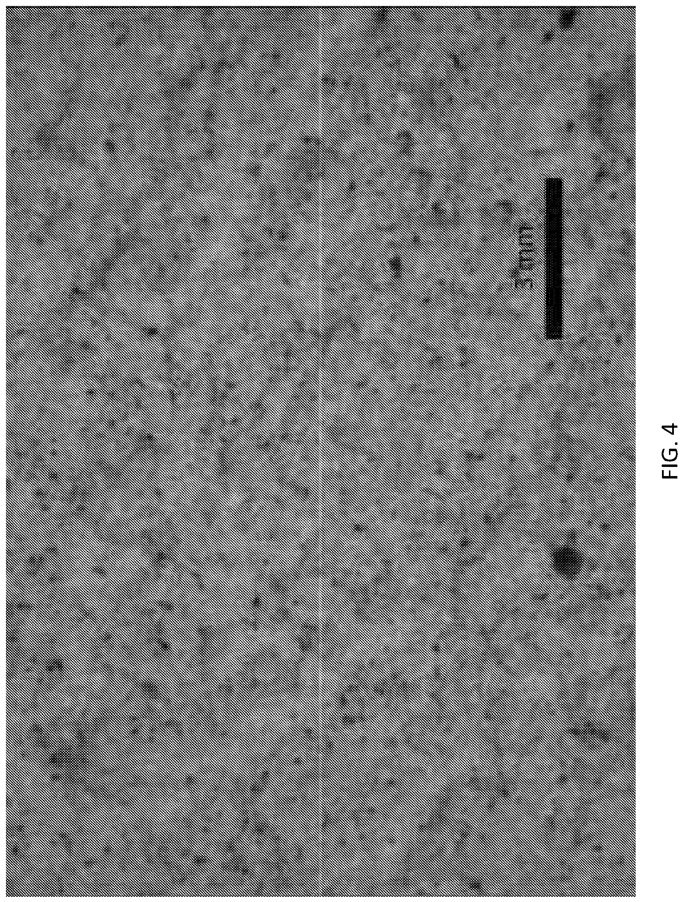

All the samples made have a homogeneous porosity both in size and in distribution, as demonstrated by Figure 4. These characteristics contribute directly to the final mechanical performance of the product: the smaller the pore size and the more homogeneous their distribution, the better the mechanical and physical performance.

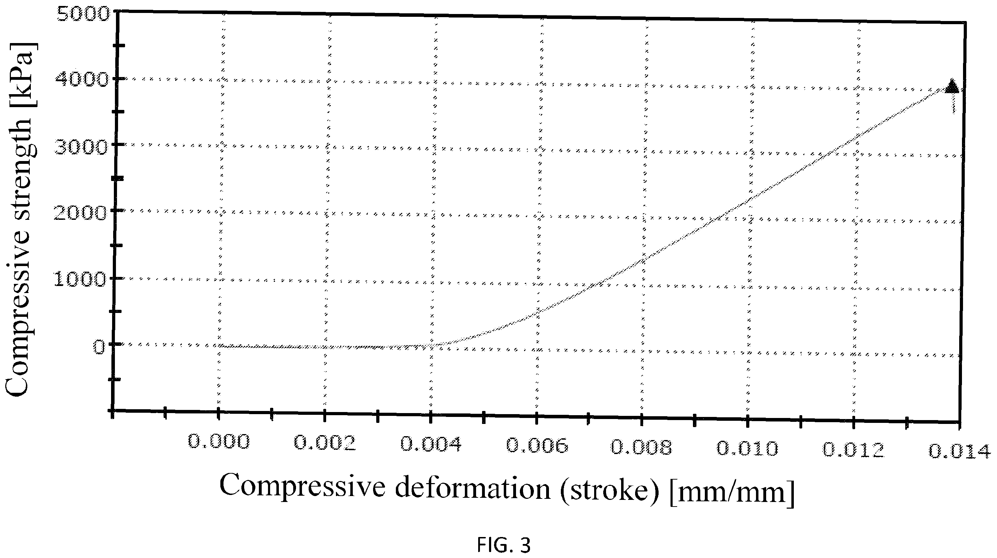

The results of the mechanical performance of the product are shown in Figure 3, in which the trend of the curve shows a typical behaviour of a brittle material, which reaches the maximum breaking load without deformations of the plastic type.

EXAMPLE 2: Composition and characterization of aqueous mixture or grout further comprising an organic charge

The following table (Table 3) shows the composition, expressed in percentage quantities for each ingredient, of the aqueous mixture or grout of the invention, comprising the addition of end-of-life tires (ELTs) rubber:

Table 3: *Percentage quantities used in the aqueous mixture or grout + ELT.*

| AQUEOUS MIXTURE OR GROUT + ELT COMPOSITION | |
|---|---|
| $CaSO_4$ | 66.5% |
| CSA Clinker | 22.2% |

(continued)

| AQUEOUS MIXTURE OR GROUT + ELT COMPOSITION | |
|---|---|
| ELT (granulated) | 9.92% |
| Fluidifier | 0.89% |
| Yeast | 0.49% |
| Water / solids ratio | 0.28 |
| $H_2O_2$ / yeast ratio | 1.3 - 2.6 (as a function of density) |

The physical and mechanical characterization tests of the samples were held after 28 days of maturation in air at room temperature. The results of these tests are given in the following table (Table 4) and, for each size, are expressed as an average of 5 repeated tests:

Table 4: *Physical and mechanical characterization of the samples of the lightened composite material of the invention, obtained from the aqueous mixture or grout further comprising an organic filler, after 28 days of maturation.*

| Density (kg/m³) | Mechanical resistance (MPa) | Thermal conductivity (W/m·K) |
|---|---|---|
| 950 | 3.92 | 0.279 |
| 800 | 2.62 | 0.227 |
| 750 | 1.74 | 0.191 |
| 650 | 1.45 | 0.155 |
| 600 | / | 0.146 |

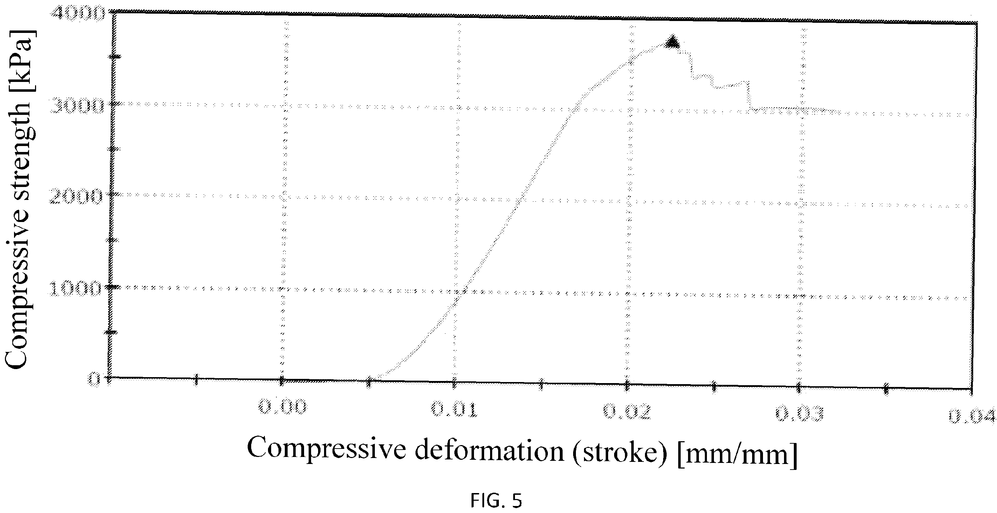

In view of a worsening of mechanical performance, compared to similar samples not containing ELT, a slight reduction in thermal conductivity and a behaviour under stress of the plastic type was obtained, as shown in the diagram shown in Figure 5.

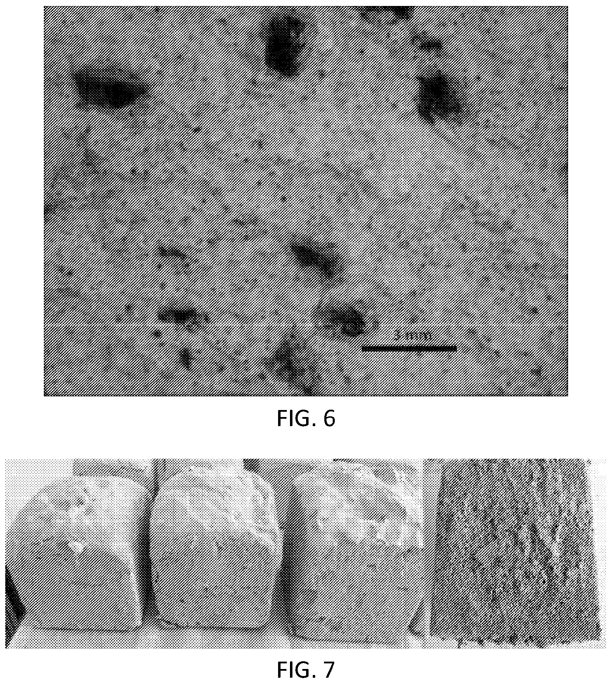

All the samples made have a less homogeneous porosity in size and distribution, compared to the analogous samples in the absence of organic charge, as shown in Figure 6.

The acquisition of plastic properties makes this material potentially attractive for further applications.

EXAMPLE 3: composition and characterization of the aqueous mixture or grout further comprising an inorganic filler

The following table (Table 5) shows the composition, expressed in percentage quantities for each ingredient, of the aqueous mixture or grout of the invention, comprising the addition of basalt fibres. The fibres used were of two types: fibres with a length of 25 mm and fibres with a length of 9 mm, in quantities of 1.0% and 2.0% respectively of the total weight of the solid material.

Table 5: *Percentage quantities used in the aqueous mixture or grout + basalt fibres.*

| AQUEOUS MIXTURE OR GROUT + BASALT FIBER COMPOSITION | |
|---|---|
| $CaSO_4$ | 82.71 - 83.71% |
| CSA Clinker | 14.8% |
| Fibre | 1.0 - 2.0% |
| Yeast | 0.49% |
| Water / solids ratio | 0.42 - 0.53% |
| Hydrogen peroxide ratio in complex solid form/ yeast | 4.28% |

EXAMPLE 4

The following Table 6 shows the tests of compressive strength and thermal conductivity carried out on the lightened calcium sulphate-based composite cement material, a further subject of the invention (BIOAERMAC) at different densities compared to materials having general characteristics and applications similar to the product that is the object of the invention.

These commercial materials find application in the construction field in the construction of walls, dividers, partitions and false ceilings.

As can be seen, the materials that are the object of the invention show thermal conductivity and compressive strength at a similar density parity and in some cases better than those of the products currently on the market.

Table 6 - Mechanical stability testing

| Materials | Type | Density [Kg/m$^3$] | Compressive strength [MPa] | Thermal conductivity $\lambda_{10,dry}$ | Reference |
|---|---|---|---|---|---|
| BIOAERMAC | Gypsum based | 950 | 6 | 0.305 | |
| | | 800 | 3.1 | 0.258 | |
| | | 750 | 2.3 | 0.213 | |
| | | 650 | 1.45 | 0.172 | |
| Lapillus block | Vibrocompressed panel obtained from a mixture based on expanded clay, lapillus, cement | 1400 | 2.5/3 | 0.4 | [1] |
| Laterite panel | vibrocompressed concrete obtained from a mixture based on expanded clay, cement, water | 900 | 4/4.5 | 0.289 | [2] |
| Sound-insulating laterite panel | lightened concrete with expanded clay | 1000 | 3.5 | 0.208 | [3] |
| Lecablocco Bioclima Superlight | expanded clay concrete and expanded glass | 750 | 2.5 | 0.144 | [4] |
| GASBETON® | Autoclaved aerated concrete | 630 | ≥ 5 | 0.16 | [5] |
| UNIBLOC Vibrocompressed concrete | Plaster block (CASS 2025) | 950 | > 6 | 0.7 | [6] |
| | Thermally insulated plaster block (ISO20) | 820 | 3.5 | 0.23 | [6] |
| Poroton® Eco | Brick with vertical holes (P300) | 680 | - | 0.134 | [7] |
| | Brick with vertical holes (PP300 DuoS25) | 775 | - | 0.172 | [8] |
| KNAUF • DIAMANT® High Performance GKFI | Gypsum core reinforced with mineral fibres | 1000 | - | 0.25 | [9] |
| coated gypsum boards | | | | | |
| LATEROGESSO 10FL | Perforated gypsum block | 900 | 1.18 | - | [10] |

The following are the bibliographical references cited in the above table

_References_

1. https://www.prefedil.it/images/DOP/Blocco%20Lapillo%2015

2. https://www.prefedil.it/images/DOP/Laterite%207,5.pdf

3. https://www.prefedil.it/images/DOP/Laterite%20fonoisolante.pdf

4. https://www.lecablocco.it/wp-contentluploads/2015/06/BioclimaSuperlight2012.pdf

5. https://www.bacchispa.it/wp-content/uploads/2022/11/BACCHI_51922_cat_Generale2022_rev10_IT_web .pdf

6. httvs://www.unibloc.it/files/cg010719.pdf

7. https://www.scianaticolaterizi.it/laterizi/poroton-eco-divisorio-p-300/

8. https://www.scianaticolaterizi.it/laterizi/poroton-eco-divisorio-pp-300-duos25/

9. https://tortallaisolanti.it/cartongesso/76-854-knauf-lastra-diamant-13-mm.html#/92-spessore-125_mm/100-dimensioni_lastra-larg_1200_mm_lung_3000_mm

10. http://www.italpannelli.net/doc/IP_Blocchi2009.pdf

## Claims

1. Aqueous mixture or grout comprising

    A) a solid material in turn containing:

    • calcium sulphate dihydrate in a concentration between 60 and 90% by weight on the total weight of said solid material A) contained in said grout;
    • cement material in a concentration between 5 and 30% by weight on the total weight of the solid material A) contained in said aqueous mixture or grout,

    B) an aerating agent;
    C) a fluidizing agent, and
    D) water in a water / solid weight ratio between 0.2 and 0.6,
    E) potassium sulphate,

    **wherein**

    i. the calcium sulphate dihydrate contained in the solid material A) is obtained in situ by treatment of synthetic anhydrous calcium sulphate, preferably synthetic anhydrite, with the water D) in which the potassium sulphate E) is dissolved in a concentration between 0.9 and 1.7 % preferably 1.3% by weight with respect to the weight of the anhydrous calcium sulphate (w/w),
    ii. the cement material comprises cement and sulfoaluminate clinker,
    iii. the aerating agent comprises or consists of an aqueous solution of hydrogen peroxide or a complexed peroxide in solid form capable of decomposing, releasing hydrogen peroxide) and a bio-organism containing the catalase enzyme which promotes the dismutation of the peroxide into water and oxygen, the latter resulting in the bio-aeration of the aqueous mixture.

2. Aqueous mixture or grout according to claim 1, wherein said bio-organism is an Ascomycetes fungus of the genus *Saccharomyces,* preferably it is *Saccharomyces cerevisiae.*

3. Mixture according to claim 1 or 2 containing said bio-organism in a concentration between 0.4 and 0.6% by weight on the total weight of the solid material.

4. Aqueous mixture according to any one of claims 1-3, wherein the weight ratio of hydrogen peroxide in liquid or complex solid form/ bio-organism is comprised between 1 and 6 (w/w).

5. Aqueous mixture according to any one of claims 1-4, comprising F) an organic or inorganic filler.

6. Lightened calcium sulphate-based composite cement material, obtained by maturation of the aqueous mixture according to any one of claims 1-5, wherein said maturation occurs at room temperature for a period comprised between 25 and 30 days, preferably equal to 28 days.

7. Product comprising the lightened calcium sulphate-based composite cement material according to claim 6.

8. Product according to claim 7 chosen from plasterboard and plaster block.

9. Process for preparing the lightened composite material according to claim 6, comprising the following steps:

   a) preparing the aqueous mixture or grout according to any one of claims 1 to 5;
   b) depositing the aqueous mixture or grout inside a formwork;
   c) removing the mixture from the formwork after a time between 2 and 3 hours;
   d) exposing the mixture to air, at room temperature, until complete maturation, for a time between 25 and 30 days, preferably 28 days.

10. Process according to claim 9, wherein step a) of preparing the aqueous mixture or grout comprises the following steps:

   a.1) dry mixing the solid material A) comprising the anhydrous calcium sulphate, the cement material, the hydrogen peroxide in the case in which the latter is complexed in solid form and
   a.2) adding to the mixture of powders and water, in a water/solids weight ratio between 0.2 and 0.6, preferably between 0.31 and 0.35, more preferably equal to 0.33 (w/w), at a temperature comprised between 18°C and 45°C, preferably 25°C, forming a liquid mixture, and in which water the potassium sulphate E) and the bioorganism have been previously dissolved, comprising the catalase in a concentration between 0.9 and 1.7% by weight on the total weight of the anhydrous calcium sulphate;
   a.3) mixing and mechanically homogenizing the liquid mixture, for a time of at least 3 minutes;
   a.4) adding the hydrogen peroxide to the mixed and homogenized liquid mixture, in the event in which the aerating agent contains an aqueous solution of hydrogen peroxide, with a titre between 20 and 35%.

**Patentansprüche**

1. Wässriges Gemisch oder Vergussmasse, umfassend:

   A) einen Feststoff, der wiederum enthält:

   ∘ Calciumsulfat-Dihydrat in einer Konzentration zwischen 60 und 90 Gew.-% bezogen auf das Gesamtgewicht des besagten Feststoffs A), der in der besagten Vergussmasse enthalten ist;
   ∘ ein zementartiges Material in einer Konzentration zwischen 5 und 30 Gew.-% bezogen auf das Gesamtgewicht des Feststoffs A), der in dem besagten wässrigen Gemisch oder der Vergussmasse enthalten ist,

   B) ein Belüftungsmittel;
   C) ein Fließmittel; und
   D) Wasser in einem Gewichtsverhältnis von Wasser zu Feststoffen zwischen 0,2 und 0,6,
   E) Kaliumsulfat,

   **wobei**

   i. das in dem Feststoff A) enthaltene Calciumsulfat-Dihydrat *in situ* durch Behandlung von synthetischem wasserfreiem Calciumsulfat, vorzugsweise synthetischem Anhydrit, mit dem Wasser D), in dem das Kaliumsulfat E) in einer Konzentration zwischen 0,9 und 1,7 Gew.-%, vorzugsweise 1,3 Gew.-%, bezogen auf das Gewicht des wasserfreien Calciumsulfats (G/G), gelöst ist, erhalten wird,
   ii. das zementartige Material Zement und Sulfoaluminat-Klinker umfasst,
   iii. das Belüftungsmittel eine wässrige Lösung von Wasserstoffperoxid oder ein komplexiertes Peroxid in fester Form, das fähig ist, sich unter Freisetzung von Wasserstoffperoxid zu zersetzen, und einen Bioorganismus, der das Katalase-Enzym enthält, umfasst, welches die Dismutation des Peroxids zu Wasser und Sauerstoff fördert, wobei letzterer zur Bio-Belüftung des wässrigen Gemischs führt.

2. Wässriges Gemisch oder Vergussmasse nach Anspruch 1, wobei der besagte Bioorganismus ein Ascomyceten-Pilz der Gattung *Saccharomyces* ist, vorzugsweise *Saccharomyces cerevisiae.*

3. Gemisch nach Anspruch 1 oder 2, das den besagten Bioorganismus in einer Konzentration zwischen 0,4 und 0,6 Gew.-% bezogen auf das Gesamtgewicht des Feststoffs enthält.

4. Wässriges Gemisch nach einem der Ansprüche 1-3, wobei das Gewichtsverhältnis von Wasserstoffperoxid in flüssiger oder komplexierter fester Form zu dem Bioorganismus zwischen 1 und 6 (G/G) liegt.

5. Wässriges Gemisch nach einem der Ansprüche 1-4, umfassend F) einen organischen oder anorganischen Füllstoff.

6. Erleichtertes zementartiges Verbundmaterial auf Calciumsulfatbasis, erhalten durch Aushärtung des wässrigen Gemischs nach einem der Ansprüche 1-5, wobei die besagte Aushärtung bei Raumtemperatur für einen Zeitraum zwischen 25 und 30 Tagen, vorzugsweise gleich 28 Tagen, erfolgt.

7. Produkt, umfassend das erleichterte zementartige Verbundmaterial auf Calciumsulfatbasis nach Anspruch 6.

8. Produkt nach Anspruch 7, ausgewählt aus Gipskartonplatte und Gipsblock.

9. Verfahren zur Herstellung des erleichterten Verbundmaterials nach Anspruch 6, umfassend die folgenden Schritte:

   a) Herstellen des wässrigen Gemischs oder der Vergussmasse nach einem der Ansprüche 1 bis 5;
   b) Einbringen des wässrigen Gemischs oder der Vergussmasse in eine Schalung;
   c) Entnehmen des Gemischs aus der Schalung nach einer Zeit zwischen 2 und 3 Stunden;
   d) Aussetzen des Gemischs an Luft bei Raumtemperatur bis zur vollständigen Aushärtung für eine Zeit zwischen 25 und 30 Tagen, vorzugsweise 28 Tagen.

10. Verfahren nach Anspruch 9, wobei Schritt a) des Herstellens des wässrigen Gemischs oder der Vergussmasse die folgenden Schritte umfasst:

    a.1) Trockenmischen des Feststoffs A), der das wasserfreie Calciumsulfat, das zementartige Material und das Wasserstoffperoxid, falls letzteres in fester Form komplexiert ist, umfasst; und
    a.2) Zugeben von Wasser zu dem Pulvergemisch in einem Gewichtsverhältnis von Wasser zu Feststoffen zwischen 0,2 und 0,6, vorzugsweise zwischen 0,31 und 0,35, weiter vorzugsweise gleich 0,33 (G/G), bei einer Temperatur zwischen 18 °C und 45 °C, vorzugsweise 25°C, wodurch ein flüssiges Gemisch gebildet wird, und in welchem Wasser das Kaliumsulfat E) und der Bioorganismus zuvor gelöst wurden, umfassend die Katalase in einer Konzentration zwischen 0,9 und 1,7 Gew.-% bezogen auf das Gesamtgewicht des wasserfreien Calciumsulfats;
    a.3) Mischen und mechanisches Homogenisieren des flüssigen Gemischs für eine Dauer von mindestens 3 Minuten;
    a.4) Zugeben des Wasserstoffperoxids zu dem gemischten und homogenisierten flüssigen Gemisch, falls das Belüftungsmittel eine wässrige Lösung von Wasserstoffperoxid mit einem Titer zwischen 20 und 35 % enthält.

**Revendications**

1. Mélange aqueux ou coulis comprenant :

   A) une matière solide contenant à son tour :

      ◦ du sulfate de calcium dihydraté en une concentration comprise entre 60 et 90 % en poids par rapport au poids total de ladite matière solide A) contenue dans ledit mélange aqueux ou coulis ;
      ◦ une matière cimentaire en une concentration comprise entre 5 et 30 % en poids par rapport au poids total de la matière solide A) contenue dans ledit mélange aqueux ou coulis,

   B) un agent d'aération ;
   C) un agent fluidifiant ;
   D) de l'eau, dans un rapport pondéral eau/solides compris entre 0,2 et 0,6 ;
   E) du sulfate de potassium,

**dans lequel**

i. le sulfate de calcium dihydraté contenu dans la matière solide A) est obtenu *in situ* par traitement de sulfate de calcium anhydre synthétique, de préférence de l'anhydrite synthétique, avec l'eau D) dans laquelle le sulfate de potassium E) est dissous en une concentration comprise entre 0,9 et 1,7 %, de préférence 1,3 %, en poids par rapport au poids du sulfate de calcium anhydre (p/p),

ii. la matière cimentaire comprend du ciment et du clinker sulfo-alumineux,

iii. l'agent d'aération comprend ou consiste en une solution aqueuse de peroxyde d'hydrogène ou un peroxyde complexé sous forme solide capable de se décomposer en libérant du peroxyde d'hydrogène, et un bio-organisme contenant l'enzyme catalase qui favorise la dismutation du peroxyde en eau et en oxygène, ce dernier entraînant la bioaération du mélange aqueux.

2. Mélange aqueux ou coulis selon la revendication 1, dans lequel ledit bio-organisme est un champignon ascomycète du genre *Saccharomyces,* de préférence il s'agit de *Saccharomyces cerevisiae.*

3. Mélange selon la revendication 1 ou 2, contenant ledit bio-organisme en une concentration comprise entre 0,4 et 0,6 % en poids par rapport au poids total de la matière solide.

4. Mélange aqueux selon l'une quelconque des revendications 1 à 3, dans lequel le rapport pondéral peroxyde d'hydrogène sous forme liquide ou solide complexe / bio-organisme est compris entre 1 et 6 (p/p).

5. Mélange aqueux selon l'une quelconque des revendications 1 à 4, comprenant F) une charge organique ou inorganique.

6. Matériau cimentaire composite allégé à base de sulfate de calcium, obtenu par maturation du mélange aqueux selon l'une quelconque des revendications 1 à 5, dans lequel ladite maturation s'effectue à température ambiante pendant une période comprise entre 25 et 30 jours, de préférence égale à 28 jours.

7. Produit comprenant le matériau cimentaire composite allégé à base de sulfate de calcium selon la revendication 6.

8. Produit selon la revendication 7, choisi parmi une plaque de plâtre et un carreau de plâtre.

9. Procédé de préparation du matériau composite allégé selon la revendication 6, comprenant les étapes suivantes :

a) préparer le mélange aqueux ou le coulis selon l'une quelconque des revendications 1 à 5 ;

b) déposer le mélange aqueux ou le coulis à l'intérieur d'un coffrage ;

c) retirer le mélange du coffrage après une durée comprise entre 2 et 3 heures ;

d) exposer le mélange à l'air, à température ambiante, jusqu'à maturation complète, pendant une durée comprise entre 25 et 30 jours, de préférence 28 jours.

10. Procédé selon la revendication 9, dans lequel l'étape a) de préparation du mélange aqueux ou du coulis comprend les étapes suivantes :

a.1) mélanger à sec la matière solide A) comprenant le sulfate de calcium anhydre, la matière cimentaire, le peroxyde d'hydrogène dans le cas où ce dernier est complexé sous forme solide ; et

a.2) ajouter de l'eau au mélange de poudres, en un rapport pondéral eau/solides compris entre 0,2 et 0,6, de préférence entre 0,31 et 0,35, plus préférablement égal à 0,33 (p/p), à une température comprise entre 18 °C et 45 °C, de préférence 25 °C, pour former un mélange liquide, et dans laquelle eau le sulfate de potassium E) et le bio-organisme ont été préalablement dissous, comprenant la catalase en une concentration comprise entre 0,9 et 1,7 % en poids par rapport au poids total du sulfate de calcium anhydre ;

a.3) mélanger et homogénéiser mécaniquement le mélange liquide, pendant une durée d'au moins 3 minutes ;

a.4) ajouter le peroxyde d'hydrogène au mélange liquide mélangé et homogénéisé, dans le cas où l'agent d'aération contient une solution aqueuse de peroxyde d'hydrogène, avec un titre compris entre 20 et 35 %.

FIG. 1

FIG. 2

FIG. 3

FIG. 4

EP 4 476 192 B1

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2016202650 A1
- CN 112876112 A
- CN 112876122 A
- CN 103771896 A
- GB 2395731 A
- US 6774146 B2
- WO 2019049005 A1

**Non-patent literature cited in the description**

- **SWITALA J** ; **LOEWEN PC**. Diversity of properties among catalases.. *Arch Biochem Biophys.*, 15 May 2002, vol. 401 (2), 145-54
- **TRACZYK ALEKSANDRA** ; **BILINSKI TOMASZ** ; **LITWINSKA JADWIGA** ; **SKONECZNY MAREK** ; **RYTKA, JOANNA**. Catalase T deficient mutants of Saccharomyces cerevisiae.. *Acta Microbiologica Polonica*, February 1985, vol. 34 (3-4), 231-241
- **SEAH TONY C.M.** ; **BHATTI A** ; **KAPLAN GORDIN J**. Novel catalytic proteins of baker's yeast. An atypical catalase.. *Canadian Journal of Biochemistry*, November 1973, vol. 51 (11), 1551-1555